# FASCICULE DE BREVET EUROPEEN

(11) **EP 3 097 634 B1**
(45) Date de publication et mention de la délivrance du brevet: **12.05.2021**
(21) Numéro de dépôt: 14814940.4
(22) Date de dépôt: 24.11.2014
(51) Int. Cl.: H02K 13/02

(54) **DISPOSITIF ISOLANT POUR COLLECTEUR DE MACHINE ELECTRIQUE, COLLECTEUR ET ALTERNATEUR CORRESPONDANTS**
ISOLIERUNGSVORRICHTUNG FÜR DEN KOMMUTATOR DER ELEKTRISCHEN MASCHINE, ZUGEHÖRIGE KOMMUTATOR UND LICHTMASCHINE
ISOLATION DEVICE FOR COLLECTOR OF ELECTRIC MACHINE, CORRESPONDING COLLECTOR AND ALTERNATOR

(30) Priorité: 22.01.2014 FR 1450501
(43) Date de publication de la demande: 30.11.2016
(73) Titulaire: Valeo Equipements Electriques Moteur, 94046 Créteil Cedex (FR)
(72) Inventeur: MAQUINGHEN, Eric, 62170 Bernieulles (FR); THUEUR, Olivier, 62780 Stella Plage (FR); BLONDEL, Bastien, 50250 Prétôt Sainte Suzanne (FR)
(86) Numéro de dépôt international: PCT/FR2014/053003
(87) Numéro de publication internationale: WO 2015/110716

(56) Documents cités:
- EP-A1- 2 330 695
- DE-A1-102005 031 535
- DE-A1-102009 040 106
- FR-A1- 2 930 382

## Description

La présente invention porte sur un dispositif isolant pour collecteur de machine électrique, ainsi que sur le collecteur correspondant. L'invention trouve une application particulièrement avantageuse, mais non exclusive, avec les alternateurs de véhicules automobiles.

On connaît des collecteurs rapportés réalisés par surmoulage de matière isolante sur des éléments électriquement conducteurs et destinés à être montés par emmanchement en force sur l'arbre moleté ou non d'un rotor d'alternateur.

Plus précisément, comme cela est décrit dans le document FR2710197, ce type de collecteur comprend un corps sensiblement cylindrique présentant à sa surface extérieure deux bagues collectrices, ainsi que deux traces soudées chacune via une de leur extrémité sur une face interne d'une des bagues collectrices. Du côté de l'extrémité opposée, chaque trace est munie d'un moyen de connexion avec des fils d'un bobinage du rotor pour son alimentation.

Le document FR2930382 divulgue un dispositif isolant connexe pour un collecteur de machine électrique, un collecteur connexe pour un alternateur et un alternateur connexe pour un véhicule automobile. Lors du montage du collecteur sur l'arbre d'alternateur, l'ettort d'emmanchement induit des risques de microfissures dans la partie en plastique surmoulée qui dispose d'une capacité de déformation plastique faible. Ces microfissures se produisent en particulier au niveau des zones de soudure entre les traces et les bagues à l'endroit desquelles la surface n'est pas régulière du fait des effets de pics causés par la soudure par ultrason. Il a été observé que le courant circulant dans les bagues collectrices profite de la fragilité des propriétés isolantes du matériau surmoulé au niveau des microfissures pour atteindre l'arbre du rotor, ce qui pose des problèmes d'isolation électrique de l'ensemble.

L'invention vise à remédier efficacement à cet inconvénient en proposant un dispositif isolant selon la revendication 1 pour un collecteur de machine électrique destiné à être emmanché à force sur un arbre de rotor de machine électrique, ledit collecteur comportant deux bagues collectrices connectées chacune à une trace, 2. comportant un élément de protection destiné à être disposé au moins en partie entre ledit arbre et lesdites bagues collectrices, ledit élément de protection étant configuré pour isoler, par rapport audit arbre, au moins une zone de connexion d'une des traces avec la bague collectrice correspondante, avant surmoulage de 2. l'ensemble, caractérisé en ce qu'il comporte en outre un élément d'indexage comprenant une collerette annulaire assurant un maintien d'un écart axial entre les deux bagues collectrices pour garantir une isolation des deux bagues collectrices, l'élément d'indexage et l'élément de protection étant deux pièces distinctes.

Ainsi, l'invention permet de créer une barrière entre l'arbre de la machine électrique et les zones de connexion entre les traces et les bagues collectrices, en sorte que les éventuelles microfissures générées par l'effort d'emmanchement ne pourront pas se propager au-delà de l'élément de protection. On garantit ainsi une bonne isolation électrique entre l'arbre de la machine électrique et les zones de connexion quelles que soient les conditions dans lesquelles le montage du collecteur sur l'arbre est réalisé. Selon une réalisation, ledit élément de protection comporte au moins une zone de guidage d'une trace s'étendant axialement, ladite zone de guidage comportant au moins une paroi isolante destinée à s'étendre entre ledit arbre et ladite zone de connexion.

Selon une réalisation, ledit élément de protection comporte deux zones de guidage.

Selon une réalisation, lesdites deux zones de guidage sont sensiblement diamétralement opposées l'une par rapport à l'autre.

Selon une réalisation, ladite au moins une zone de guidage est formée par une gorge ayant un profil sensiblement en forme de U.

Selon une réalisation, ladite gorge s'étend en saillie vers l'intérieur dudit élément de protection. La ou les gorges pourront ainsi coopérer avec des creusures de forme correspondante ménagées à la périphérie externe de l'arbre de la machine électrique.

Selon une réalisation, l'élément de protection comporte un rebord destiné à venir en appui contre une face d'extrémité axiale d'une des deux bagues collectrices. Un tel rebord permet d'assurer un positionnement sous contrôle de l'élément de protection par rapport aux bagues collectrices.

Selon 2. l'invention, ledit dispositif isolant comporte en outre un élément d'indexage comprenant une collerette annulaire assurant un maintien d'un écart axial entre les deux bagues collectrices. Cela permet de garantir une isolation entre les deux bagues collectrices.

Selon un exemple, ledit élément d'indexage comporte en outre une languette destinée à être positionnée entre une trace et la bague collectrice qui n'est pas connectée à cette trace. Cela permet d'assurer une isolation entre la trace et la bague collectrice.

Selon une réalisation, ledit dispositif isolant est réalisé dans un matériau thermoplastique, thermodurcissable ou composite.

L'invention a également pour objet un collecteur pour alternateur notamment de véhicule automobile muni d'un dispositif isolant selon l'invention.

L'élément de protection, les deux bagues collectrices et les traces peuvent être surmoulés pour permettre leur maintien mécanique de sorte que lorsque le collecteur est emmanché à force sur l'arbre, l'élément de protection est disposé au moins en partie entre l'arbre et lesdites bagues collectrices.

En outre, l'invention concerne un alternateur pour véhicule automobile muni d'un collecteur selon l'invention monté sur un arbre dudit alternateur.

L'invention sera mieux comprise à la lecture de la description qui suit et à l'examen des figures qui l'accompagnent. Ces figures ne sont données qu'à titre illustratif mais nullement limitatif de l'invention.
La figure 1a montre une vue en perspective d'un élément de protection appartenant au dispositif isolant selon la présente invention ;
La figure 1b est une vue en perspective d'un élément d'indexage appartenant au dispositif isolant selon la présente invention;
Les figures 2a à 2e montrent les différentes étapes de réalisation d'un collecteur selon la présente invention;
La figure 3a est une vue en coupe transversale suivant le plan P de la figure 2d passant par la bague collectrice inférieure;
La figure 3b est une vue détaillée de la position de la languette de l'élément d'indexage entre la bague collectrice et la trace;
La figure 4 est une vue en perspective d'une variante de réalisation du dispositif isolant selon la présente invention;
Les figures 5a et 5b représentent les deux parties issues d'une coupe longitudinale d'un ensemble formé par le dispositif isolant de la figure 4 coopérant avec deux bagues collectrices.

Les éléments identiques, similaires, ou analogues conservent la même référence d'une figure à l'autre.

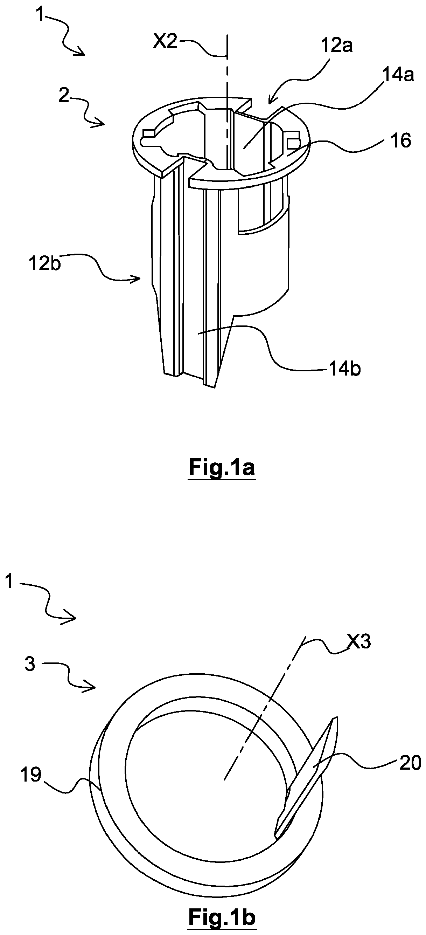

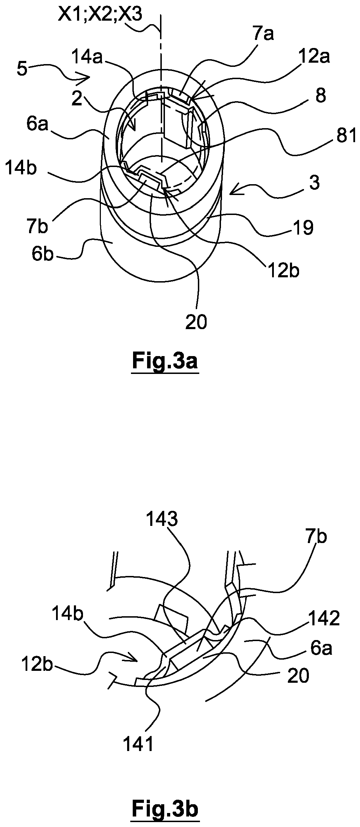

Les figures 1a et 1b montrent un premier mode de réalisation d'un dispositif isolant 1 selon la présente invention comportant un élément de protection 2 et un élément d'indexage 3 décrits plus en détails ci-après. Ces éléments 2, 3 sont utilisés dans un collecteur 5 de machine électrique destiné à être monté par emmanchement en force sur un arbre moleté 8 de machine électrique (cf. figure 3). L'arbre 8 appartient de préférence à un alternateur notamment pour véhicule automobile. Alternativement, il s'agit d'un arbre d'alterno-démarreur ou de moteur électrique.

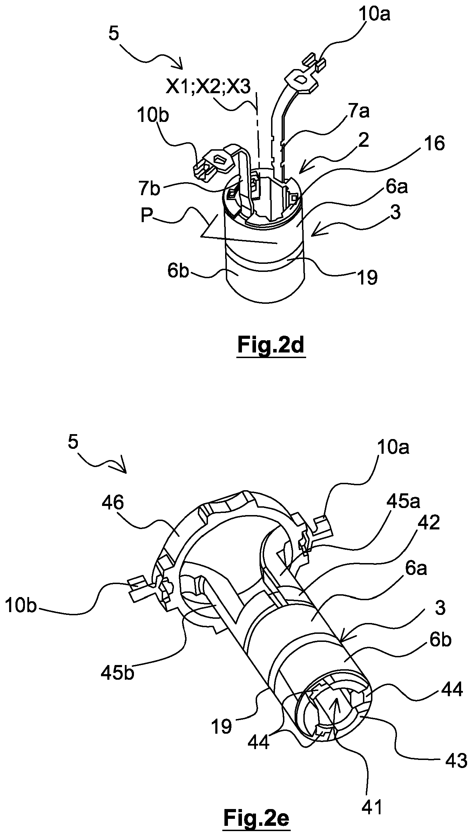

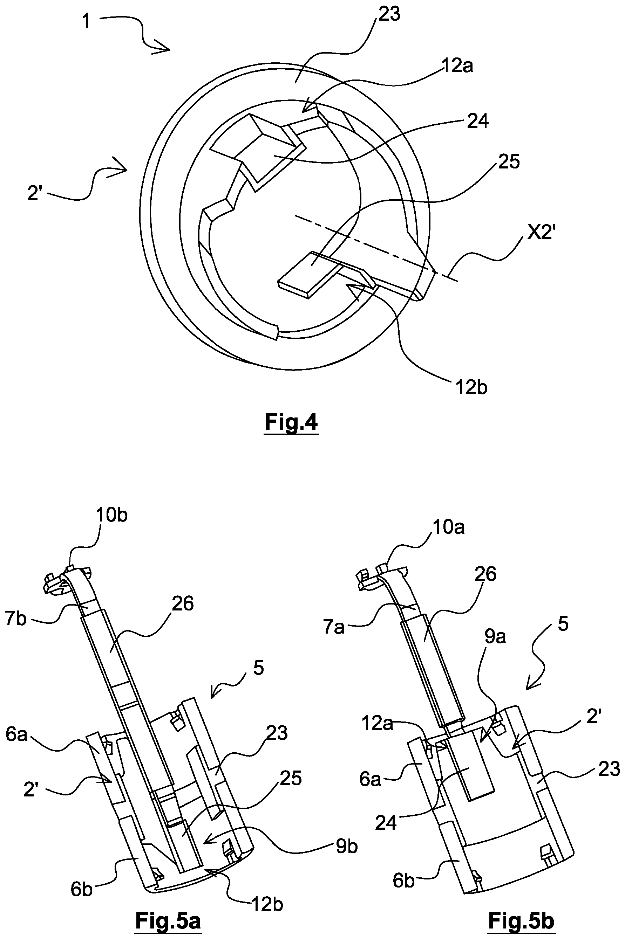

Comme on peut le voir sur les figures 2d, 5a et 5b, le collecteur 5 comporte deux bagues collectrices 6a, 6b connectées chacune électriquement à une trace 7a, 7b. Chaque bague 6a, 6b est constituée d'un anneau creux d'axe X1 réalisé dans un matériau conducteur électrique, de préférence en cuivre.

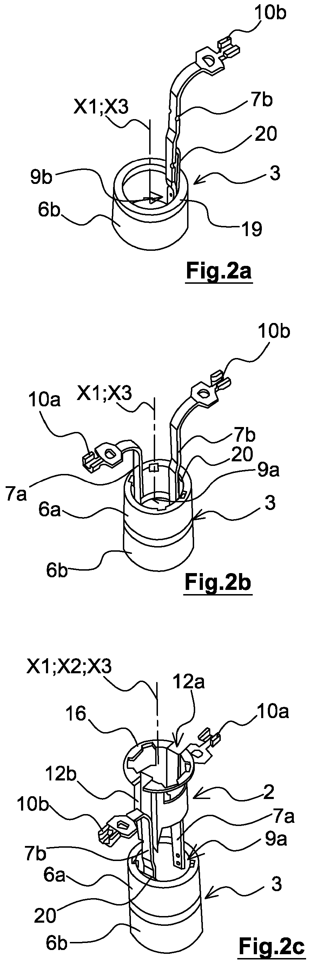

Chaque trace 7a, 7b présente une extrémité soudée avec la face interne d'une des bagues 6a, 6b dans une zone de connexion 9a, 9b visible notamment sur les figures 2a et 2c. La soudure pourra par exemple être réalisée par une technique par ultrason. L'extrémité opposée de chaque trace 7a, 7b est munie d'un élément de connexion 10a, 10b à un fil de bobinage du rotor. On distingue la bague 6a dite "inférieure" destinée à être positionnée du côté du rotor et la bague 6b dite "supérieure" positionnée du côté opposé au rotor vers le palier arrière de l'alternateur.

L'élément de protection 2 bien visible sur la figure 1a est destiné à être disposé au moins en partie entre l'arbre d'alternateur 8 et lesdites bagues collectrices 6a et 6b. L'élément de protection 2 présente une forme globalement cylindrique creuse d'axe X2 avec un diamètre légèrement inférieur au diamètre interne des bagues collectrices 6a, 6b pour permettre son insertion à l'intérieur desdites bagues 6a, 6b.

L'élément de protection 2 est configuré pour isoler, par rapport à l'arbre d'alternateur 8, chaque zone de connexion 9a, 9b entre une trace 7a, 7b et la bague correspondante 6a, 6b. A cet effet, l'élément de protection 2 comporte une zone de guidage 12a, 12b pour chaque trace 7a, 7b s'étendant axialement par rapport à l'axe X2. Les deux zones de guidage 12a, 12b sont sensiblement diamétralement opposées l'une par rapport à l'autre.

En l'occurrence, chaque zone de guidage 12a, 12b est formée par une gorge 14a, 14b ayant un profil sensiblement en forme de U. Chaque gorge 14a, 14b est délimitée par des parois isolantes s'étendant entre l'arbre d'alternateur 8 et la trace correspondante 7a, 7b. La largeur et la hauteur des gorges 14a, 14b correspondent aux dimensions des traces 7a, 7b.

Les gorges 14a, 14b s'étendent en saillie vers l'intérieur de l'élément de protection 2. Les gorges 14a, 14b définissent ainsi des saillies de section sensiblement rectangulaire s'étendant suivant une longueur substantielle de l'élément de protection 2. Ces saillies sont destinées à coopérer avec des creusures 81 de forme correspondante ménagées à la périphérie externe de l'arbre d'alternateur 8 sur lequel le collecteur 5 est emmanché à force.

En outre, un rebord 16 est destiné à venir en appui contre une face d'extrémité axiale d'une des bagues 6a, 6b. Un tel rebord 16 permet d'assurer un positionnement sous contrôle de l'élément de protection 2 par rapport aux bagues collectrices 6a, 6b.

Le dispositif isolant 1 comporte également un élément d'indexage 3 d'axe X3 comportant une collerette annulaire 19 assurant un maintien d'un écart axial, en l'occurrence sensiblement constant, entre les deux bagues 6a et 6b. Cela permet de garantir une isolation des bagues 6a et 6b l'une par rapport à l'autre. La collerette 19 présente un diamètre interne et un diamètre externe correspondant au diamètre interne et au diamètre externe des bagues collectrices 6a et 6b.

L'élément d'indexage 3 comporte en outre une languette 20 issue d'une périphérie interne de la collerette 19 s'étendant axialement par rapport à l'axe X3. La languette 20 présente une largeur plus large que celle d'une trace 7a, 7b et une longueur correspondant sensiblement à la hauteur d'une bague collectrice 6a, 6b.

L'élément de protection 2 et l'élément d'indexage 3 pourront par exemple être réalisés dans un matériau plastique thermoplastique, thermodurcissable, ou composite.

On décrit ci-après, en référence avec les figures 2a à 2d, les différentes étapes d'assemblage du dispositif isolant 1 avec les bagues collectrices 6a, 6b.

Comme montré sur la figure 2a, l'élément d'indexage 3 est positionné dans un premier temps contre une face d'extrémité axiale de la bague supérieure 6b, en sorte que la languette 20 est plaquée contre une face de la trace correspondante 7b tournée vers l'extérieur de la bague 6b.

Comme montré sur la figure 2b, la bague inférieure 6a est ensuite plaquée contre l'élément d'indexage 3 qui assure ainsi une séparation entre les deux bagues collectrices 6a et 6b. La languette 20 est alors positionnée entre la trace 7b connectée à la bague supérieure 6b et la face interne de la bague inférieure 6a, ce qui permet d'assurer une isolation entre ces deux éléments 7b et 6a (cf. figure 3).

Comme montré sur la figure 2c, l'élément de protection 2 est positionné en sorte que les traces 7a, 7b sont positionnées à l'intérieur des gorges 14a, 14b et que l'extrémité opposée au rebord 16 se situe en regard des bagues collectrices 6a et 6b. L'axe X2 de l'élément de protection 2 se trouve sensiblement confondu avec les axes X1 et X3 des bagues 6a, 6b et de l'élément d'indexage 3. L'élément de protection 2 est ensuite inséré par coulissement axial à l'intérieur des bagues collectrices 6a, 6b jusqu'à ce que le rebord 16 vienne en appui contre une face d'extrémité axiale de la collerette 19, ce qui garantit un montage correct de l'ensemble visible sur la figure 2d.

Il sera alors possible d'injecter un matériau plastique isolant thermoplastique, thermodurcissable, ou composite pour assurer un maintien mécanique et améliorer l'isolation électrique de l'assemblage.

On obtient alors la partie en matière plastique montrée à la figure 2e comportant une partie 41 de forme générale cylindrique qui s'étend à l'intérieur de l'ensemble formé par les bagues 6a, 6b et les éléments 2 et 3. Ce cylindre 41 est prolongé, en direction des éléments de connexion 10a, 10b, par une autre partie cylindrique 42 dont la surface extérieure vient en affleurement avec la surface extérieure de la bague inférieure 6a.

Du côté opposé à la partie cylindrique 42, la partie cylindrique 41 se prolonge par une collerette 43. On comprend que l'ensemble comportant les bagues 6a, 6b et les éléments 2 et 3 est fermement emprisonné en direction axiale entre les parties 42 et 43.

Dans la partie 43 sont ménagées trois encoches 44 espacées angulairement entre elles de manière régulière. Ces encoches 44 ont un double rôle. Tout d'abord, les encoches 44 sont destinées à recevoir des doigts de pression de l'automate, qui vont exercer l'effort sur la pièce en agissant non pas sur ses parties en matière plastique, mais sur le bord de la bague supérieure 6b lors de l'emmanchement du collecteur 5 sur l'arbre 8. De la sorte, cet effort est exercé sans risque de détérioration de la matière plastique de la pièce. Les encoches 44 permettent également d'assurer un détrompage quant au positionnement angulaire de la pièce sur l'alternateur avant son emmanchement.

Le collecteur 5 après surmoulage comprend en outre deux branches en matière plastique 45a, 45b dans lesquelles sont entièrement noyées les parties conductrices de raccordement correspondant au portions des traces 7a, 7b situées à l'extérieur des bagues 6a, 6b, et une partie en forme d'anneau 46 d'axe confondu avec l'axe X1 des bagues 6a, 6b. L'anneau 46 est relié aux branches 45a, 45b et se situe au niveau des éléments de connexion 10a, 10b. La réalisation de l'anneau 46 au cours de l'étape de surmoulage permet de rigidifier le collecteur 5 dans la région des éléments de connexion 10a, 10b, en garantissant que leur distance mutuelle en direction radiale soit bien déterminée.

Comme cela ressort de la figure 3a, les parois délimitant les gorges 14a, 14b sont positionnées autour des zones de connexion 9a, 9b entre les traces 7a, 7b et les bagues collectrices 6a, 6b. Ainsi, même en cas d'apparition de microfissures dans le matériau de surmoulage suite à l'emmanchement à force sur l'arbre d'alternateur 8, les parois délimitant les gorges 14a, 14b joueront le rôle de barrière isolante entre l'arbre d'alternateur 8 et les zones de connexion 9a, 9b.

Comme on peut le voir à la figure 3b, la languette 20 de l'élément d'indexage 3 située entre la trace 7b et la bague inférieure 6a pourra comporter une face interne et une face externe suivant la courbure de la bague inférieure 6a, la face interne comportant un ergot contre lequel est en appui la trace 7b. Les parois latérales 141, 142 délimitant la gorge 14b et reliées entre elles par la paroi 143 sont courbes et écartées des parois latérales de la trace 7b, en sorte que la matière plastique injectée lors du surmoulage pourra combler les espaces entre les parois 141, 142 et les faces latérales de la trace 7b.

Les figures 4, 5a et 5b montrent une variante de réalisation du dispositif isolant 1 selon la présente invention comportant uniquement un élément de protection référencé 2'. L'élément de protection 2' pourra par exemple être réalisé dans un matériau plastique isolant thermoplastique, thermodurcissable, ou composite.

Cet élément de protection 2' d'axe X2' comprend une collerette annulaire 23 assurant un maintien d'un écart axial entre les deux bagues collectrices 6a, 6b. La collerette annulaire 23 présente un diamètre interne et un diamètre externe correspondant au diamètre interne et au diamètre externe des bagues collectrices 6a et 6b.

Dans ce mode de réalisation, les deux zones de guidage 12a, 12b sont positionnées axialement de part et d'autre de la collerette 23. Une des zones de guidage 12a est formée par une gorge 24 ayant un profil sensiblement en forme de U tandis que l'autre zone de guidage 12b est formée par une portion 25 ayant un profil en forme de L. La gorge 24 et la portion 25 s'étendent en saillie vers l'intérieur de l'élément de protection 2' pour pouvoir coopérer avec les creusures 81 de forme correspondante ménagées à la périphérie externe de l'arbre d'alternateur 8.

Les traces 7a et 7b sont de préférence recouvertes d'une gaine isolante 26. Comme on peut le voir sur la figure 5a, la gaine isolante 26 permet d'assurer une isolation électrique entre la trace 7b connectée à la bague supérieure 6b et la face interne de la bague inférieure 6a. Alternativement ou en complément, la bague inférieure 6a est isolée de la grande trace 7b par un surmoulage de cette dernière.

Lors de l'assemblage entre l'élément de protection 2' et les bagues collectrices 6a, 6b, l'élément de protection 2' est plaqué via sa collerette 23 contre une face d'extrémité axiale de la bague supérieure 6b.

L'élément de protection 2' est ensuite déplacé en rotation autour de son axe X2', en sorte que la zone de connexion 9b de la trace 7b avec la bague supérieure 6b pénètre à l'intérieur de l'espace délimité par la portion 25 en forme de L comme cela est visible sur la figure 5a.

La bague inférieure 6a est ensuite positionnée autour de l'élément de protection 2' de manière à être plaquée contre la face de la collerette 23 opposée à la bague supérieure 6b. Le positionnement de la bague inférieure 6a est effectué en sorte que la zone de connexion 9a entre la trace 7a et la bague inférieure 6a vient se loger par insertion axiale dans la gorge de guidage 24, comme cela ressort de la figure 5b.

Le maintien mécanique de l'ensemble sera effectué comme précédemment par injection d'un matériau plastique isolant thermoplastique, thermodurcissable, ou composite (cf. figure 2e).

Ainsi, même en cas d'apparition de microfissures dans le matériau de surmoulage suite à l'emmanchement à force du collecteur 5 sur l'arbre d'alternateur 8, les parois de l'élément de protection 2' joueront un rôle de barrière isolante entre l'arbre d'alternateur 8 et les zones de connexion 9a, 9b, ce qui évitera les problèmes d'isolation.

Bien entendu, les deux modes de réalisation du dispositif isolant précédemment décrits ne limitent pas le domaine de l'invention dont on ne sortirait pas en remplaçant les différents détails d'exécution par tous autres équivalents comme il sont définis par les revendications ci-jointes.

## Revendications

1. Dispositif isolant (1) pour un collecteur (5) de machine électrique destiné à être emmanché à force sur un arbre (8) de rotor de machine électrique, ledit collecteur (5) comportant deux bagues collectrices (6a, 6b) connectées chacune à une trace (7a, 7b), le dispositif comportant : un élément de protection (2, 2') destiné à être disposé au moins en partie entre ledit arbre (8) et lesdites bagues collectrices (6a, 6b), ledit élément de protection (2, 2') étant configuré pour isoler, par rapport audit arbre (8), au moins une zone de connexion (9a, 9b) d'une des traces (7a, 7b) avec la bague collectrice correspondante (6a, 6b), avant surmoulage de l'ensemble,
comportant en outre un élément d'indexage (3) comprenant une collerette annulaire (19) assurant un maintien d'un écart axial entre les deux bagues collectrices (6a, 6b), **caractérisé en ce que** Z l'élément d'indexage (3) garantit une isolation des deux bagues collectrices (6a, 6b) et **en ce que** l'élément d'indexage et l'élément de protection (2, 2') sont deux pièces distinctes.

2. Dispositif isolant selon la revendication 1, **caractérisé en ce que** ledit élément de protection (2, 2') comporte au moins une zone de guidage (12a, 12b) d'une trace (7a, 7b) s'étendant axialement, ladite zone de guidage (12a, 12b) comportant au moins une paroi isolante destinée à s'étendre entre ledit arbre (8) et ladite zone de connexion (9a, 9b).

3. Dispositif isolant selon la revendication 2, **caractérisé en ce que** ledit élément de protection (2, 2') comporte deux zones de guidage (12a, 12b).

4. Dispositif isolant selon la revendication 3, **caractérisé en ce que** lesdites deux zones de guidage (12a, 12b) sont sensiblement diamétralement opposées l'une par rapport à l'autre.

5. Dispositif isolant selon l'une quelconque des revendications 2 à 4, **caractérisé en ce que** ladite au moins une zone de guidage (12a, 12b) est formée par une gorge (14a, 14b) ayant un profil sensiblement en forme de U.

6. Dispositif isolant selon la revendication 5, **caractérisé en ce que** ladite gorge (14a, 14b) s'étend en saillie vers l'intérieur dudit élément de protection (2).

7. Dispositif isolant selon l'une quelconque des revendications 1 à 6, **caractérisé en ce que** l'élément de protection (2) comporte un rebord (16) destiné à venir en appui contre une face d'extrémité axiale d'une des deux bagues collectrices (6a, 6b).

8. Dispositif isolant selon l'une quelconque des revendications 1 à 7, **caractérisé en ce qu'**il est réalisé dans un matériau thermoplastique, thermodurcissable ou composite.

9. Collecteur (5) pour alternateur notamment de véhicule automobile muni d'un dispositif isolant (1) selon l'une quelconque des revendications précédentes.

10. Collecteur (5) selon la revendication 9, l'élément de protection (2, 2'), les deux bagues collectrices (6a, 6b) et les traces (7a, 7b) étant surmoulés pour permettre leur maintien mécanique de sorte que lorsque le collecteur (5) est emmanché à force sur l'arbre (8), l'élément de protection (2, 2') est disposé au moins en partie entre l'arbre (8) et lesdites bagues collectrices (6a, 6b).

11. Alternateur pour véhicule automobile muni d'un collecteur (5) selon la revendication 9 ou 10 monté sur un arbre (8) dudit alternateur.

## Patentansprüche

1. Isolierungsvorrichtung (1) für einen Kommutator (5) einer elektrischen Maschine, der dazu bestimmt ist, mit Kraft auf eine Welle (8) eines Rotors einer elektrischen Maschine aufgesteckt zu werden, wobei der Kommutator (5) zwei Kommutatorringe (6a, 6b) aufweist, die jeweils mit einem Leiter (7a, 7b) verbunden sind, wobei die Vorrichtung Folgendes aufweist: ein Schutzelement (2, 2'), das dazu bestimmt ist, wenigstens teilweise zwischen der Welle (8) und den Kommutatorringen (6a, 6b) angeordnet zu sein, wobei das Schutzelement (2, 2') dazu ausgebildet ist, bezogen auf die Welle (8) mindestens einen Bereich zur Verbindung (9a, 9b) eines der Leiter (7a, 7b) mit dem entsprechenden Kommutatorring (6a, 6b) vor dem Überformen der Anordnung zu isolieren,
ferner aufweisend ein Indexierungselement (3), das einen ringförmigen Kragen (19) umfasst, das eine Einhaltung eines axialen Abstands zwischen den zwei Kommutatorringen (6a, 6b) sicherstellt, **dadurch gekennzeichnet, dass** das Indexierungselement (3) eine Isolation der zwei Kommutatorringe (6a, 6b) gewährleistet, und dadurch, dass das Indexierungselement und das Schutzelement (2, 2') zwei gesonderte Teile sind.

2. Isolierungsvorrichtung nach Anspruch 1, **dadurch gekennzeichnet, dass** das Schutzelement (2, 2') mindestens einen Bereich zur Führung (12a, 12b) eines Leiters (7a, 7b) aufweist, der sich axial erstreckt, wobei der Führungsbereich (12a, 12b) mindestens eine Isolierwand aufweist, die dazu bestimmt ist, sich zwischen der Welle (8) und dem Verbindungsbereich (9a, 9b) zu erstrecken.

3. Isolierungsvorrichtung nach Anspruch 2, **dadurch gekennzeichnet, dass** das Schutzelement (2, 2') zwei Führungsbereiche (12a, 12b) aufweist.

4. Isolierungsvorrichtung nach Anspruch 3, **dadurch gekennzeichnet, dass** die zwei Führungsbereiche (12a, 12b) einander im Wesentlichen diametral entgegengesetzt sind.

5. Isolierungsvorrichtung nach einem der Ansprüche 2 bis 4, **dadurch gekennzeichnet, dass** der mindestens eine Führungsbereich (12a, 12b) von einer Nut (14a, 14b) mit einem im Wesentlichen U-förmigen Profil gebildet ist.

6. Isolierungsvorrichtung nach Anspruch 5, **dadurch gekennzeichnet, dass** sich die Nut (14a, 14b) zum Inneren des Schutzelements (2) hervorstehend erstreckt.

7. Isolierungsvorrichtung nach einem der Ansprüche 1 bis 6, **dadurch gekennzeichnet, dass** das Schutzelement (2) einen Rand (16) aufweist, der dazu bestimmt ist, an einer axialen Endfläche eines der zwei Kommutatorringe (6a, 6b) anzuliegen.

8. Isolierungsvorrichtung nach einem der Ansprüche 1 bis 7, **dadurch gekennzeichnet, dass** sie aus einem thermoplastischen, wärmehärtenden oder Verbundmaterial hergestellt ist.

9. Kommutator (5) für einen Wechselstromgenerator, insbesondere eines Kraftfahrzeugs, der mit einer Isolierungsvorrichtung (1) nach einem der vorhergehenden Ansprüche versehen ist.

10. Kommutator (5) nach Anspruch 9, wobei das Schutzelement (2, 2'), die zwei Kommutatorringe (6a, 6b) und die Leiter (7a, 7b) überformt sind, um ihren mechanischen Halt zu gestatten, so dass, wenn der Kommutator (5) mit Kraft auf die Welle (8) aufgesteckt ist, das Schutzelement (2, 2') wenigstens teilweise zwischen der Welle (8) und den Kommutatorringen (6a, 6b) angeordnet ist.

11. Wechselstromgenerator für ein Kraftfahrzeug, der mit einem Kommutator (5) nach Anspruch 9 oder 10 versehen ist, der an einer Welle (8) des Wechselstromgenerators angebracht ist.

## Claims

1. Insulating device (1) for a commutator (5) of an electrical machine intended to be force-fitted onto a rotor shaft (8) of the electrical machine, said commutator (5) comprising two commutator slip-rings (6a, 6b) each connected to a line (7a, 7b), the device comprising: a protection element (2, 2') intended to be disposed at least partly between said shaft (8) and said commutator slip-rings (6a, 6b), said protection element (2, 2') being configured to insulate, with respect to said shaft (8), at least one connection zone (9a, 9b) of one of the lines (7a, 7b) with the corresponding commutator slip-ring (6a, 6b), before overmoulding of the assembly,
further comprising an indexing element (3) comprising an annular collar (19) ensuring that an axial gap is maintained between the two commutator slip-rings (6a, 6b), **characterized in that** the indexing element (3) guarantees an insulation of the two commutator slip-rings (6a, 6b) and **in that** the indexing element and the protection element (2, 2') are two distinct parts.

2. Insulating device according to Claim 1, **characterized in that** said protection element (2, 2') comprises at least one guiding zone (12a, 12b) for a line (7a, 7b) extending axially, said guiding zone (12a, 12b) comprising at least one insulating wall intended to extend between said shaft (8) and said connection zone (9a, 9b).

3. Insulating device according to Claim 2, **characterized in that** said protection element (2, 2') comprises two guiding zones (12a, 12b).

4. Insulating device according to Claim 3, **characterized in that** said two guiding zones (12a, 12b) are substantially diametrically opposite with respect to one another.

5. Insulating device according to any one of Claims 2 to 4, **characterized in that** said at least one guiding zone (12a, 12b) is formed by a groove (14a, 14b) having a substantially U-shaped profile.

6. Insulating device according to Claim 5, **characterized in that** said groove (14a, 14b) extends by protruding towards the interior of said protection element (2) .

7. Insulating device according to any one of Claims 1 to 6, **characterized in that** the protection element (2) comprises a flange (16) that is intended to come to bear against an axial end face of one of the two commutator slip-rings (6a, 6b).

8. Insulating device according to any one of Claims 1 to 7, **characterized in that** it is produced in a thermoplastic, thermoset or composite material.

9. Commutator (5) for an alternator, notably of a motor vehicle, provided with an insulating device (1) according to any one of the preceding claims.

10. Commutator (5) according to Claim 9, the protection element (2, 2'), the two commutator slip-rings (6a, 6b) and the lines (7a, 7b) being overmoulded to allow them to be mechanically secured so that when the commutator (5) is force-fitted onto the shaft (8), the protection element (2, 2') is disposed at least partly between the shaft (8) and said commutator slip-rings (6a, 6b).

11. Alternator for a motor vehicle provided with a commutator (5) according to Claim 9 or 10 mounted on a shaft (8) of said alternator.
